# EUROPÄISCHE PATENTANMELDUNG

(11) **EP 2 025 508 A1**
(43) Veröffentlichungstag der Anmeldung: **18.02.2009**
(21) Anmeldenummer: 07405238.2
(22) Anmeldetag: 14.08.2007
(51) Int. Cl.: B32B 15/08, B32B 27/08, B65D 65/40, B65D 1/26

(54) **Kaltverformbares laminat**

(71) Anmelder: Alcan Technology & Management Ltd., 8212 Neuhausen am Rheinfall (CH)
(72) Erfinder: Pasbrig, Erwin, 78224 Singen (DE)

(57) **Zusammenfassung**

Ein kaltverformbares, aus Aluminium- und Kunststofffolie aufgebautes Laminat dient zur Herstellung von Behältern zur Verpackung von pharmazeutischen und medizintechnischen Produkten, Diagnostika und dgl. Produkten, die einen Schutz gegenüber Feuchtigkeit, Sauerstoff, Gasen, Geruchstoffen und/oder UV-Strahlen benötigen oder zur Verhinderung einer Diffusion artspezifischer Stoffe aus einem verpackten Produkt aus dem Behälterinneren nach aussen. Das Laminat weist den Aufbau Kunststofffolie 1a (optional) / Kunststofffolie 1 / Aluminiumfolie 1 / biaxial gereckte Kunststofffolie 2 / biaxial gereckte Kunststofffolie 2a (optional) / Aluminiumfolie 2 / Kunststofffolie 3 / Kunststofffolie 3a (optional) auf.

## Beschreibung

Die Erfindung betrifft ein kaltverformbares, aus Aluminium- und Kunststofffolie aufgebautes Laminat für die Herstellung von Behältern zur Verpackung von pharmazeutischen und medizintechnischen Produkten, Diagnostika und dgl. Produkten, die einen Schutz gegenüber Feuchtigkeit, Sauerstoff, Gasen, Geruchstoffen und/oder UV-Strahlen benötigen oder zur Verhinderung einer Diffusion artspezifischer Stoffe aus einem verpackten Produkt aus dem Behälterinneren nach aussen. Im Rahmen der Erfindung liegt auch ein aus dem Laminat durch Kaltumformung hergestellter Verpackungsbehälter.

Für die Herstellung von Behältern zur Verpackung von pharmazeutischen und medizintechnischen Produkten, Diagnostika und dgl. Produkten, die einen Schutz gegenüber Feuchtigkeit, Sauerstoff, Gasen, Geruchstoffen und/oder UV-Strahlen benötigen oder eine Diffusion artspezifischer Stoffe aus einem verpackten Produkt aus dem Behälterinneren nach aussen verhindern, wie z.B. Bodenteile von Blister- oder Durchdrückpackungen, sind kaltverformbare Laminate mit dem Aufbau biaxial gereckte Kunststofffolie / Aluminiumfolie / Siegelschicht (Lack, Kunststofffolie oder Kunststoffbeschichtung) bekannt. Die Verbindung der aussenseitigen Kunststofffolie mit der Aluminiumfolie erfolgt über einen Klebstoff, wobei die Aluminiumfolie überwiegend lackiert ist, um den Einfluss von Belegungen auf der Aluminiumfolie zu kompensieren. Es ist auch schon vorgeschlagen worden, die Verbindung zwischen einer aussenseitigen Folie aus biaxial gerecktem Polyamid und der Aluminiumfolie durch Heisskalandrierung herzustellen, wobei der Klebstoff bzw. das Kaschiermittel vorgängig aufgetragen und getrocknet wurde.

Aus der WO 94/19184 ist ein kaltverformbares Laminat mit einer Aluminiumfolie, auf beiden Seiten der Aluminiumfolie angeordneten, biaxial gereckten Folien aus Polyamid und auf einer der Polyamidfolien angeordneter Siegelschicht bekannt. Hierdurch wird eine verbesserte Kaltverformung erreicht.

Aus der WO 97/19811 ist ein Laminat mit einer Aluminiumfolie, einer auf einer ersten Seite der Aluminiumfolie angeordneten, biaxial gereckten Folie aus Polyamid, auf welche eine weitere Kunststofffolie, vorzugsweise ebenfalls eine biaxial gereckte Polyamidfolie, kaschiert ist, und einer auf der zweiten Seite der Aluminiumfolie angeordneten Siegelschicht bekannt. Hierdurch wird eine verbesserte Steifigkeit und Planlage erreicht.

Der Erfindung liegt die Aufgabe zugrunde, ein zur Herstellung von Verpackungsbehältern geeignetes, kaltverformbares Laminat der eingangs genannten Art zu schaffen, das im Vergleich zu den Laminaten nach dem Stand der Technik eine deutlich höhere mechanische Festigkeit und eine sehr gute Umformbarkeit durch Kaltformung aufweist.

Zur erfindungsgemässen Lösung der Aufgabe führt, dass das Laminat den Aufbau

Kunststofffolie 1 a (optional) / Kunststofffolie 1 / Aluminiumfolie 1 / biaxial gereckte Kunststofffolie 2 / biaxial gereckte Kunststofffolie 2a (optional) / Aluminiumfolie 2 / Kunststofffolie 3 / Kunststofffolie 3a (optional) aufweist.

Die biaxial gereckte Kunststofffolie 2 und die biaxial gereckte Kunststofffolie 2a sind bevorzugt aus Polypropylen (PP), Polyester, Polyvinylchlorid (PVC), Polyfluorethylen, Polyamid (PA), Cycloolefincopolymer (COC) oder Cycloolefin-polymer (COP).

Die biaxial gereckte Kunststofffolie 2 und die biaxial gereckte Kunststofffolie 2A weisen bei Anwesenheit beider Folien bevorzugt je eine gleiche oder unterschiedliche Dicke von 5 bis 40 µm, vorzugsweise 6 bis 30 µm, auf. Bei Anwesenheit nur einer Folie weist diese bevorzugt eine Dicke von 5 bis 60 µm, vorzugsweise 12 bis 40 µm, auf.

Die Aluminiumfolie 1 und die Aluminiumfolie 2 sind bevorzugt weich und weisen je eine gleiche oder unterschiedliche Dicke von 20 bis 100 µm, vorzugsweise 30 bis 60 µm, auf.

Die Kunststofffolie 1, die Kunststofffolie 1a, die Kunststofffolie 3 und die Kunststofffolie 3a sind bevorzugt aus Polyethylen (PE), Polypropylen (PP), Polyvinylchlorid (PVC), Polyvinylidenchlorid (PVDC), Polyfluorethylen, Polystyrol (PS), Cycloolefincopolymer (COC), Cycloolefinpolymer (COP), Polyacrylnitril (PAN), Polyamid (PA), Polyester, Polycarbonat (PC), Polyisobutylen (PIB), Polyvinylalkohol (PVOH), Polyimid (PI), Polysulfon (PSU), Ethylenvinylalkohol (EVOH), Blends oder coextrudierte Folien aus wenigstens zwei der vorgenannten Kunststoffe.

Die Kunststofffolie 1, die Kunststofffolie 1a, die Kunststofffolie 3 und die Kunststofffolie 3a weisen bevorzugt je eine gleiche oder unterschiedliche Dicke von 10 bis 150 µm, vorzugsweise 12 bis 100 µm, auf.

Sind die genannten Kunststoffe extrudierbar, so können sie durch Extrusion dem Laminat auch als Extrusionsschicht zugeführt werden.

Die einzelnen Kunststoff- und Aluminiumfolien des Laminates können untereinander durch Kaschierkleber und/oder Extrusionskaschierung verbunden sein. Eine Lackkaschierung kann mit wässrigen, lösungsmittelbasierten oder lösungsmittelfreien Kaschiermitteln durchgeführt werden. Die Kaschiermittel, wie Lacke, Kaschierkleber und/oder Haftvermittler und gegebenenfalls Vorlacke, können durch Kaschieren, durch Heisskalandrieren, durch Extrusionsbeschichten, durch Coextrusionsbeschichten oder durch eine Kombinationen dieser Verfahren zu dem Laminat verbunden werden.

Geeignete Kaschierkleber können lösungsmittelhaltig oder lösungsmittelfrei und auch wasserhaltig sein. Beispiele von Kaschierklebern sind lösungsmittelhaltige, lösungsmittelfreie oder wässrige Acrylatkleber oder Polyurethan-Kleber-Systeme. Aber auch Klebstoffe welche unter Einwirkung von elektromagnetischen Strahlen (z.B. UV; Elektronen-Strahlen) aushärten, können eingesetzt werden.

Bevorzugt werden Kaschierkleber auf Polyurethan-Basis.

Als Haftvermittler könnten beispielsweise Di-isocyanat oder aliphatische Polyester eingesetzt werden. In der Regel werden diese Haftvermittler nur zwischen den nach aussen gerichteten Schichten angewendet.

Geeignete Lacke sind z.B. Lacke auf der Basis von Acrylaten, Epoxidharzen. Melaminharzen, Harnstoffharzen, Polyurethanen, Zellulosenitrat. Polyester und Mischungen derselben.

Die Lacke beispielsweise können lösemittelbasierend oder auf wässriger Basis sein oder können Ein-, Zwei- oder Mehrkomponenten-Systeme sein. Die Lacke sind beispielsweise durch Trocknen, durch Wärme, chemisch und/oder durch Strahlen (UV; Elektronenstrahlen; IR) härtbar.

Zweckmässig werden die Kaschiermittel zwischen den einzelnen Schichten der Verbunde für die erfindungsgemässen Verpackungsbehälter in einer Dicke von 0,1 µm bis 12 µm angewendet.

Der Kaschierkleber kann beispielsweise in Mengen von 1 bis 10 g/m² vorzugsweise in Mengen von 2 bis 8 g/m² und insbesondere in Mengen von 3 bis 6 g/m² angewendet werden.

Die Kaschierkleber können auch in solchen Mengen angewendet werden, dass sie Schichten von wenigstens 0,1 µm Dicke und maximal 12 µm Dicke ausbilden.

Die Metalloberfläche kann durch entsprechende Vorbehandlung (z.B. bürsten, chromatieren, lonisierungs-, Ozon-, Korona-, Flamm- oder Plasmabehandlung) eine verbesserte Haftung für den Kleber oder Lack oder für eine Extrusionsschicht aufweisen. Zur Unterstützung und Verbesserung der Verbundhaftung der Lacke, Haftvermittler oder Kaschierkleber zwischen den Kunststofffolien oder von extrudierten Schichten, ist es oft zweckmässig den Folien auf den Kleber zugewandten Seiten oder den Extrudaten eine ausreichende Oberflächenspannung zu vermitteln. Die Erhöhung der Oberflächenspannung kann vorzugsweise durch eine lonisierungs-, Ozon-, Plasma-, Flamm- oder eine Koronavorbehandlung erfolgen.

Die Verbindung zwischen den einzelnen Schichten des Laminates kann auch durch Extrusionskaschierung oder Heisskalandrierung erhalten werden.

Auf der Aussenseite, bezogen auf den später aus dem Laminat hergestellten Verpackungsbehälter, kann das Laminat mit einem gegebenenfalls überlackierten Druckmuster versehen sein. Das Druckmuster kann auch zwischen zwei durchsichtigen Kunststofffolien als Konterdruck ausgeführt sein. Es kann auch die Aussenseite des Laminates mit einem Lack versehen werden, wobei der Lack fallweise auch bedruckt sein kann und/oder auf den Abpackanlagen bedruckbar ist.

Die zur Anwendung gelangenden Kunststofffolien können transparent, durchscheinend oder opak sein und können klar oder teilweise oder ganz gefärbt sein.

Aus dem erfindungsgemässen Laminat durch Kaltumformung hergestellte Verpackungsbehälter können mit einem Deckel versehen werden. Solche Deckel können beispielsweise Deckfolien sein, die auf einen Siegelrand gesiegelt werden. Geeignete Deckelfolien können eine Metallfolie. wie eine Aluminiumfolie enthalten und auf der Metallfolie können auf einer oder beiden Seiten Kunststofffolien und/oder Lacke aufgebracht sein. Auf wenigstens einer Seite der Deckfolie kann eine äusserste Schicht in Form einer Siegelschicht vorgesehen sein. Über die Siegelschicht kann die Deckfolie mit dem Verpackungsbehälter verbunden werden.

In der nachstehenden Tabelle ist eine Auswahl von efindungsgemäss aufgebauten, kaltverformbaren Laminaten zusammengestellt. Mit "Aussenseite" ist die beim Verpackungsbehälter die Aussenseite bildende, mit "Innenseite" die zur Siegelung gegen den Kunststoff einer Deckfolie gerichtete Seite des Laminates bezeichnet.

Die Kurzbezeichnungen der den Folien zugrunde liegenden Kunststoffe bedeuten:

| | |
|---|---|
| PA Polyamid | PE Polyethylen |
| PP Polypropylen | PVDC Polyvinylidenchlorid |
| PVC Polyvinylchlorid | PET Polyethylenterephthalat |
| COC Cycloolefin-Copolymer | COP Cycloolefin-Polymer |
| PAN Polyacrylnitril | EVOH Ethylenvinylalkohol |
| PTFE Polytetrafluorethylen | |
| PVTFE Polyvinylidenfluoridtetrafluorethylen | |
| PCTFE Polyvinylidenchloridtrifluorethylen | |

### Die folgenden Abkürzungen werden in der Tabelle verwendet:

| | |
|---|---|
| K Kunststofffolie | AI Aluminiumfolie |

Die Zahlenangaben bedeuten Foliendicke in µm, bei Beschichtungen (*) das Flächengewicht in g/m².

**Tabelle: Laminataufbauten**

| **Aussenseite** | | | | | | **Innenseite** | |
|---|---|---|---|---|---|---|---|
| **K1a** | **K1** | **AI 1** | **K 2** | **K 2a** | **Al 2** | **K 3** | **K 3a** |
| | 60 PVC | 45 | 15 oPA | 15 oPA | 45 | 60 PVC | |
| | 60 PVC | 50 | 15 oPA | 15 oPA | 50 | 60 PVC | |
| | 60 PVC | 60 | 15 oPA | 15 oPA | 60 | 60 PVC | |
| | 15 PVC | 80 | 15 oPA | 15 oPA | 80 | 15 PVC | |
| | 30 PVC | 60 | 20 oPA | 20 oPA | 45 | 30 PVC | |
| | 60 PVC | 45 | 25 oPA | | 45 | 60 PVC | |
| | 60 PVC | 50 | 25 oPA | | 50 | 60 PVC | |
| | 60 PVC | 60 | 25 oPA | | 60 | 60 PVC | |
| | 60 PVC | 45 | 25 oPA | 25 oPA | 45 | 60 PVC | |
| | 60 PVC | 50 | 25 oPA | 25 oPA | 50 | 60 PVC | |
| | 60 PVC | 60 | 25 oPA | 25 oPA | 60 | 60 PVC | |
| | 60 PVC | 45 | 25 oPA | 25 oPA | 45 | 15 PVC | |
| | 30 PVC | 60 | 25 oPA | 25 oPA | 45 | 15 PVC | |
| | 60 PVC | 50 | 25 oPA | 25 oPA | 50 | 15 PVC | |
| | 60 PVC | 60 | 25 oPA | 25 oPA | 60 | 15 PVC | |
| | 15 PVC | 45 | 23 oPET | 23 oPET | 45 | 15 PVC | |
| | 15 PVC | 50 | 12 oPET | 23 oPET | 50 | 15 PVC | |
| | 15 PVC | 60 | 12 oPET | 12 oPET | 60 | 15 PVC | |
| | 15 PVC | 45 | 20 oPP | 20 oPP | 45 | 15 PVC | |
| | 15 PVC | 50 | 20 oPP | 20 oPP | 50 | 15 PVC | |
| | 15 PVC | 60 | 20 oPP | 20 oPP | 60 | 15 PVC | |
| | 15 PVC | 45 | 30 oPA | | 45 | 15 PVC | |
| | 15 PVC | 50 | 30 oPA | | 50 | 15 PVC | |
| | 15 PVC | 60 | 30 oPA | | 60 | 15 PVC | |
| | 15 PVC | 60 | 23 oPET | | 60 | 15 PVC | |
| | 15 PVC | 60 | 40 oPP | | 60 | 15 PVC | |
| | 30 PVC | 45 | 15 oPA | 15 oPA | 45 | 30 PAN | |
| | 30 PVC | 50 | 15 oPA | 15 oPA | 50 | 30 PAN | |
| | 30 PVC | 60 | 15 oPA | 15 oPA | 60 | 30 PAN | |
| | 60 PP | 45 | 15 oPA | 15 oPA | 45 | 20 P | |
| | 60 PP | 50 | 15 oPA | 15 oPA | 50 | 20 P | |
| | 60 PP | 60 | 15 oPA | 15 oPA | 60 | 20 P | |
| | 30 PVC | 45 | 15 oPA | 15 oPA | 45 | 20* PVDC | |
| | 30 PVC | 45 | 15 oPA | 15 oPA | 45 | 15 PCTFE | |
| | 40 PP | 45 | 25 oPA | 25 oPA | 45 | 30 PE | |
| | 30 PVC | 45 | 15 oPA | 15 oPA | 45 | 15 PCTFE | |
| | 40 PP | 45 | 25 oPA | 25 oPA | 45 | 30 PE | |
| | 40 PP | 45 | 25 oPA | 25 oPA | 45 | 30* PE | |
| | 40 PP | 45 | 15 oPA | 15 oPA | 45 | 23 PET | |
| | 40 PP | 45 | 15 oPA | 15 oPA | 45 | 30 PET | |
| | 40 PE | 45 | 15 oPA | 15 oPA | 45 | 30 COP | |
| | 40 PE | 60 | 15 oPA | 15 oPA | 60 | 30 COP | |
| 20 COC | 20 PE | 45 | 25 oPA | 25 oPA | 45 | 20 COC | 20 PE |
| 30 PVC | 15 oPA | 45 | 15 oPA | 15 oPA | 45 | 15 PVC | |
| 30 PVC | 15 oPA | 60 | 15 oPA | 15 oPA | 45 | 15 PVC | |
| 15 PVC | 15 oPA | 45 | 15 oPA | 15 oPA | 45 | 15 PVC | |
| 15 PVC | 15 oPA | 60 | 15 oPA | 15 oPA | 60 | 15 PVC | |
| 15 PVC | 15 oPA | 45 | 25 oPA | | 45 | 15 PVC | |
| 15 PVC | 15 oPA | 60 | 25 oPA | | 45 | 15 PVC | |
| 30 PVC | 15 oPA | 45 | 25 oPA | | 45 | 15 PVC | |
| 15 PVC | 15 oPA | 45 | 15 oPA | 15 oPA | 45 | 15 oPA | 15 |
| 15 PVC | 15 oPA | 60 | 15 oPA | 15 oPA | 60 | 15 oPA | 15 |
| 30 PVC | 15 oPA | 45 | 15 oPA | 15 oPA | 45 | 15 oPA | 30 |
| 30 PVC | 15 oPA | 60 | 15 oPA | 15 oPA | 60 | 15 oPA | 30 |
| 30 PP | 15 oPA | 45 | 15 oPA | 15 oPA | 45 | 15 oPA | 30 PP |
| 30 PP | 15 oPA | 60 | 15 oPA | 15 oPA | 60 | 15 oPA | 30 PP |
| 15 PVC | 15 oPA | 45 | 15 oPA | | 45 | 15 oPA | 15 |
| 15 PVC | 15 oPA | 60 | 15 oPA | | 60 | 15 oPA | 15 |
| 30 PVC | 15 oPA | 45 | 15 oPA | | 45 | 15 oPA | 30 |
| 30 PVC | 15 oPA | 60 | 15 oPA | | 60 | 15 oPA | 30 |
| 30 PP | 15 oPA | 45 | 15 oPA | | 45 | 15 oPA | 30 PP |
| 30 PP | 15 oPA | 60 | 15 oPA | | 60 | 15 oPA | 30 PP |
| 30 PE | 15 oPA | 45 | 15 oPA | 15 oPA | 45 | 15 oPA | 30 PE |
| 30 PE | 15 oPA | 60 | 15 oPA | 15 oPA | 60 | 15 oPA | 30 PE |
| 40 PE | 15 oPA | 45 | 15 oPA | 15 oPA | 45 | 15 oPA | 70 PE/EVOH/PE |
| 40 PE | 15 oPA | 60 | 15 oPA | 15 oPA | 60 | 15 oPA | 70 PE/EVOH/PE |
| 40 PP | 15 oPA | 45 | 15 oPA | 15 oPA | 45 | 70 PE/EVOH/PE | |
| 40 PP | 15 oPA | 60 | 15 oPA | 15 oPA | 60 | 70 PE/EVOH/PE | |
| 15 PVC | 15 oPA | 45 | 15 oPA | 15 oPA | 45 | 15 oPA | 15 |
| 15 PVC | 15 oPA | 60 | 15 oPA | 15 oPA | 60 | 15 oPA | 15 |

Die in der Tabelle enthaltenen Beispiele stellen bloss eine Auswahl bevorzugter Laminate dar. Die Erfindung ist nicht auf die genannten Beispiele begrenzt. Der Laminataufbau 15 PVC/45 AI/25 oPA/25 oPA/45 AI/15 PVC ist jedoch nicht Bestandteil der Erfindung.

## Patentansprüche

1. Kaltverformbares, aus Aluminium- und Kunststofffolie aufgebautes Laminat für die Herstellung von Behältern zur Verpackung von pharmazeutischen und medizintechnischen Produkten, Diagnostika und dgl. Produkten, die einen Schutz gegenüber Feuchtigkeit, Sauerstoff, Gasen, Geruchstoffen und/oder UV-Strahlen benötigen oder zur Verhinderung einer Diffusion artspezifischer Stoffe aus einem verpackten Produkt aus dem Behälterinneren nach aussen,
**dadurch gekennzeichnet, dass** das Laminat den Aufbau
Kunststofffolie 1a (optional) / Kunststofffolie 1 / Aluminiumfolie 1 / biaxial gereckte Kunststofffolie 2 / biaxial gereckte Kunststofffolie 2a (optional) / Aluminiumfolie 2 / Kunststofffolie 3 / Kunststofffolie 3a (optional) aufweist.

2. Kaltverformbares Laminat nach Anspruch 1, **dadurch gekennzeichnet, dass** die biaxial gereckte Kunststofffolie 2 und die biaxial gereckte Kunststofffolie 2a aus Polypropylen (PP), Polyester, Polyvinylchlorid (PVC), Polyfluorethylen, Polyamid (PA), Cycloolefincopolymer (COC) oder Cycloolefinpolymer (COP) sind.

3. Kaltverformbares Laminat nach Anspruch 1 oder 2, **dadurch gekennzeichnet, dass** die biaxial gereckte Kunststofffolie 2 und die biaxial gereckte Kunststofffolie 2a bei Anwesenheit beider Folien je eine gleiche oder unterschiedliche Dicke von 5 bis 40 µm, vorzugsweise 6 bis 30 µm, aufweisen und bei Anwesenheit nur einer Folie die Kunststofffolie 2 eine Dicke von 5 bis 60 µm, vorzugsweise 12 bis 40 µm, aufweist.

4. Kaltverformbares Laminat nach einem der Ansprüche 1 bis 3, **dadurch gekennzeichnet, dass** die Aluminiumfolie 1 und die Aluminiumfolie 2 weich sind und je eine gleiche oder unterschiedliche Dicke von 20 bis 100 µm, vorzugsweise 30 bis 60 µm, aufweisen.

5. Kaltverformbares Laminat nach einem der Ansprüche 1 bis 4, **dadurch gekennzeichnet, dass** die Kunststofffolie 1, die Kunststofffolie 1a, die Kunststofffolie 3 und die Kunststofffolie 3a aus Polyethylen (PE), Polypropylen (PP), Polyvinylchlorid (PVC), Polyvinylidenchlorid (PVDC), Polyfluorethylen, Polystyrol (PS), Cycloolefincopolymer (COC), Cycloolefinpolymer (COP), Polyacrylnitril (PAN), Polyamid (PA), Polyester, Polycarbonat (PC), Polyisobutylen (PIB), Polyvinylalkohol (PVOH), Polyimid (PI), Polysulfon (PSU), Ethylenvinylalkohol (EVOH), Blends oder coextrudierte Folien aus wenigstens zwei der vorgenannten Kunststoffe sind.

6. Kaltverformbares Laminat nach einem der Ansprüche 1 bis 5, **dadurch gekennzeichnet, dass** die Kunststofffolie 1, die Kunststofffolie 1a, die Kunststofffolie 3 und die Kunststofffolie 3a je eine gleiche oder unterschiedliche Dicke von 10 bis 150 µm, vorzugsweise 12 bis 100 µm, aufweisen.

7. Kaltverformbares Laminat nach einem der Ansprüche 1 bis 6, **dadurch gekennzeichnet, dass** die einzelnen Kunststoff- und Aluminiumfolien des Laminates untereinander durch Kaschierkleber und/oder Extrusionskaschierung verbunden sind.

8. Verpackungsbehälter aus einem kalt umgeformten Laminat nach einem der vorangehenden Ansprüche.

9. Verpackungsbehälter nach Anspruch 8 in Form eines Bodenteils mit einem Siegelrand und einer auf den Siegelrand gesiegelten Deckfolie.

10. Verwendung des Verpackungsbehälters nach Anspruch 8 oder 9 als formsteife Verpackung für pharmazeutische und medizintechnischen Produkte, Diagnostika und dgl. Produkte, die einen Schutz gegenüber Feuchtigkeit, Sauerstoff, Gasen, Geruchstoffen und/oder UV-Strahlen benötigen oder zur Verhinderung einer Diffusion artspezifischer Stoffe aus einem verpackten Produkt aus dem Behälterinneren nach aussen.
